# DEMANDE DE BREVET EUROPEEN

(11) **EP 4 437 826 A1**
(43) Date de publication de la demande: **02.10.2024**
(21) Numéro de dépôt: 23165256.1
(22) Date de dépôt: 29.03.2023
(51) Int. Cl.: A01C 23/02, A01G 29/00

(54) **DISPOSITIF D'INTRODUCTION D AU MOINS UN INTRANT DANS LE SOL ET PROCÉDÉ D'INTRODUCTION D AU MOINS UN INTRANT METTANT EN UVRE UN TEL DISPOSITIF**

(71) Demandeur: Raincatcher Technologies Trading DMCC, Dubai (AE)
(72) Inventeur: LE COZ, YANN, 29800 Pencran (FR); BOUXOM, FRANCK, 86512 Ras AL Khaimah (AE)
(74) Mandataire: Tranvouez, Edern Morgan

(57) **Abrégé**

C'est divulgué un dispositif d'introduction (1) d'au moins un intrant dans le sol. Le dispositif d'introduction (1) comprend un circuit d'alimentation en l'au moins un intrant apte à délivrer l'au moins un intrant, au moins un tube injecteur (4) comprenant une première portion destinée à être enfoncée dans le sol, l'au moins tube injecteur (4) présentant sur la première portion une ouverture (441), destinée à la délivrance de l'au moins un intrant (A) dans le sol, et un obturateur (10) conformé pour fermer ladite ouverture (441) et un mécanisme d'enfoncement de l'au moins un tube injecteur (4) configuré pour enfoncer au moins en partie la première portion du tube injecteur (4) dans le sol. L'invention concerne en outre un procédé de délivrance d'au moins un intrant.

## Description

### Domaine technique

L'invention concerne le domaine de l'agriculture et du traitement des plantes.

L'invention a ainsi plus précisément pour objet un dispositif d'introduction d'au moins un intrant dans le sol et un procédé d'introduction d'au moins un intrant mettant en oeuvre un tel dispositif.

### État de l'art antérieur

Dans le domaine de l'agriculture, il est connu que l'adjonction d'intrants, tels que de l'engrais ou des éléments favorisant l'absorption de l'eau, permet d'optimiser la croissance des plantes et leur production. Si cette adjonction est primordiale, il est également connu que cette adjonction, pour qu'elle soit optimale et permette d'obtenir les effets escomptés, doit parfaitement être contrôlée, ceci notamment vis-à-vis de la quantité et de la profondeur à laquelle le ou les intrants sont introduits.

Par intrant, il est entendu, ici est dans le reste de ce document, tout élément introduit dans le sol dans le cadre d'une exploitation agricole ou de culture d'ornement. Ainsi, si l'invention vise en particulier les intrants, tels que l'engrais et/ou des éléments favorisant l'absorption de l'eau, qui sont sous forme de grains ou de poudre, elle couvre également les intrants d'autre type, tels que des intrants sous forme de gel ou de liquide. On notera également que cette définition d'intrant couvre également, par extension, les autres types d'intrants non usuels et complémentaires aux intrants plus classiques présentés ci-dessus, tels que des graines ou un engrais liquide, qui pourraient bénéficier à être introduits avec un engrais ou des éléments favorisant l'absorption de l'eau.

A l'heure actuelle, cette introduction est réalisée en creusant une pluralité de trous, de sillons ou de tranchées autour des plantes à traiter, en déposant quelques dizaines de grammes de l'intrant au fond de chaque trou et en rebouchant les trous. Si une telle procédure permet un bon contrôle dans l'introduction de l'intrant, elle présente l'inconvénient de devoir être réalisée manuellement et peut être particulièrement fastidieuse à mettre en oeuvre lorsque le nombre de plantes à traiter est important.

On notera, de plus, qu'un tel creusement peut être rendu difficile en fonction de la nature du sol. En effet, il n'est pas forcément aisé de creuser un sol sablonneux, qui se rebouche presque instantanément, ou dans un sol d'une grande dureté.

Ainsi, il y aurait un intérêt à fournir un dispositif et un procédé associé permettant une telle introduction d'intrants optimisée ceci quelle que soit la nature du sol. De plus, s'il existe des dispositifs adaptés pour permettre l'aération des sols, tels que ceux enseignés par le document US 2006/0185567 A1 et le document KR 101049867 B1, ceux-ci sont uniquement adaptés pour l'injection de gaz pressurisé et ne fournissent pas d'enseignement lié à l'introduction d'intrant dans le sol. On notera qu'il existe également des équipements d'injection d'eau utilisés pour l'irrigation des terrains golf. Si ces équipements permettent d'injecter un intrant sous forme liquide (présentement de l'eau), ceux-ci sont conformés uniquement pour des sols terreux et ne sont clairement adaptés pour les sols sablonneux ou de grande dureté.

### Exposé de l'invention

La présente invention vise à remédier à l'inconvénient ci-dessus et a ainsi pour but de permettre une telle introduction d'intrants de manière parfaitement contrôlé et ceci quelle que soit la nature du sol.

L'invention a ainsi pour objet un dispositif d'introduction d'au moins un intrant dans le sol, le dispositif d'introduction comprenant :
- un circuit d'alimentation en intrant apte à délivrer l'au moins un intrant,
- au moins un tube injecteur comprenant une première portion destinée à être enfoncée dans le sol, l'au moins tube injecteur présentant sur la première portion une ouverture, destinée à la délivrance de l'au moins un intrant dans le sol, et un obturateur conformé pour fermer ladite ouverture, ledit au moins un tube étant alimenté en l'au moins un intrant par le circuit d'alimentation,
- un mécanisme d'enfoncement de l'au moins un tube injecteur configuré pour enfoncer au moins en partie la première portion du tube injecteur dans le sol, dans lequel l'obturateur est monté mobile entre une première position dans laquelle il ferme l'ouverture et une deuxième position dans laquelle il libère l'ouverture , le dispositif d'introduction étant configuré pour que l'obturateur passe de la première à la deuxième position lorsqu'une extrémité libre de la première portion atteint une profondeur prédéterminée.

Avec un tel dispositif, on assure d'une délivrance automatique de l'au moins un intrant à la profondeur requise ceci de manière fiable. En effet, pendant toute la période de l'enfoncement du tube injecteur, l'ouverture est protégée par l'obturateur puisqu'il est dans sa première position, par exemple en raison pression du tube injecteur lors de la descente. Une fois la profondeur prédéterminée atteinte (la profondeur où doit être délivrée l'au moins un intrant), le passage de l'obturateur dans sa deuxième position, par exemple lors du début de la phase de remontée du tube injecteur, autorise la délivrance de l'au moins un intrant dans le sol ceci sans risque que l'ouverture ait préalablement été bouchée par de la terre ou du sable.

L'au moins un tube injecteur peut s'étendre longitudinalement et présenter sa première portion filetée,
et le mécanisme d'enfoncement comprenant un système d'entraînement en rotation de l'au moins un tube injecteur.

Avec une telle première portion filetée et un tel système d'entraînement en rotation, le dispositif d'introduction selon l'invention permet une bonne pénétration du tube injecteur dans le sol ceci quel que soit le type de sol.

Le mécanisme d'enfoncement peut comprendre un capteur de couple adapté pour mesurer un couple appliqué par le mécanisme d'enfoncement sur l'au moins un tube injecteur lors de son entraînement en rotation et

le dispositif d'introduction est configuré pour stopper l'entraînement en rotation de l'au moins un tube injecteur lorsque le couple dépasse une valeur seuil.

De cette manière le dispositif d'introduction permet de protéger le tube injecteur lors de son insertion dans le sol en cas de rencontre d'un obstacle tel qu'une pierre ou de la roche.

L'extrémité libre de la première portion peut être affinée et le mécanisme d'enfoncement peut en outre configuré pour exercer une pression du tube injecteur contre le sol.

Une telle pression permet d'assurer un bon enfoncement de l'au moins un tube injecteur dans le sol.

Le dispositif d'instruction peut comprendre un système de réglage de la pression exercée par le tube injecteur contre le sol.

Un tel système de réglage permet d'adapter la pression appliquée en fonction de la nature du sol.

Le circuit d'alimentation peut comprendre un réservoir destiné à contenir l'au moins un intrant, le réservoir présentant une ouverture de délivrance de l'au moins un intrant reliée fluidiquement à l'au moins un tube injecteur au moyen d'une vanne,
et le réservoir est agencé de telle manière à ce que, en utilisation du dispositif d'introduction, le réservoir est au-dessus de l'au moins un tube injecteur et que l'au moins un intrant soit délivré à l'au moins un tube injecteur lors de l'ouverture de la vanne par action de la gravité sur ledit au moins un intrant.

Une telle délivrance par gravité commandée par une vanne permet de délivrer l'intrant au tube injecteur uniquement au moment du passage de l'obturateur dans la deuxième position pour délivrer la dose attendue à la profondeur prédéterminée.

Le circuit d'alimentation peut comprendre une source de gaz pressurisé et est configuré pour délivrer l'au moins un intrant sous pression d'un gaz pressurisé fourni par la source de gaz pressurisé, ladite source de gaz pressurisé étant préférentiellement une source d'air pressurisé.

Une telle délivrance sous gaz pressurisé permet une introduction optimisée de l'intrant dans le sol ceci notamment lorsque le sol est du type sableux.

L'obturateur peut être configuré pour passer de la première position à la deuxième position sous pression du gaz pressurisée.

Ainsi, il est possible de commander le passage de l'obturateur par la simple introduction de gaz dans le tube injecteur, tel que par exemple, lors de l'introduction de l'intrant.

L'au moins obturateur peut être monté coulissant le long d'un axe longitudinal dans la première portion du tube injecteur entre la première et la deuxième positon.

En fonctionnement du dispositif d'introduction, ledit axe longitudinal peut être sensiblement vertical de telle manière que :
- lorsque l'au moins un tube injecteur présente son extrémité libre en appui sur le sol pour son enfoncement, l'obturateur est maintenu dans la première position par cet appui,
- lorsque l'extrémité libre de la première portion atteint la profondeur prédéterminée, le passage de l'obturateur de la première à la deuxième position par coulissement est permise par un retrait au moins partiel du tube injecteur du sol permettant de cesser l'appui de l'extrémité libre de la première portion sur le sol.

De cette manière, le passage de l'obturateur de sa première à sa deuxième position peut se faire par un simple retrait partiel du tube injecteur. Cette ouverture permet ainsi, par une délivrance de l'intrant dans le tube injecteur au moment du retrait de, l'introduction de l'intrant dans le sol.

L'invention concerne en outre un procédé d'introduction d'au moins un intrant dans le sol à une profondeur prédéterminée, le procédé d'introduction étant mise en oeuvre au moyen d'un dispositif d'introduction selon l'invention, le procédé d'introduction comprenant les étapes suivantes :
- enfoncement de la première portion de l'au moins un tube injecteur dans le sol jusqu'à que l'extrémité libre de la première portion atteigne une profondeur prédéterminée,
- passage de l'obturateur de la première position dans laquelle il ferme l'ouverture à la deuxième position dans laquelle il libère l'ouverture,
- alimentation de l'au moins un tube injecteur par l'au moins un intrant afin que celui-ci soit introduit dans le sol par l'ouverture.

Un tel procédé permet d'obtenir une introduction d'intrant à partir d'un dispositif d'introduction selon l'invention en bénéficiant ainsi des avantages liés à un tel dispositif.

Lors de l'étape d'alimentation de l'au moins un tube injecteur par l'au moins un intrant, l'au moins un intrant est délivré sous pression d'un gaz pressurisé.

Une telle délivrance sous pression d'un gaz pressurisé permet une introduction optimisée pour certain type de sol tel que les sols sableux.

L'au moins un intrant peut comprendre un élément nutritif et un élément favorisant l'absorption de l'eau.

L'utilisation d'un tel intrant en combinaison avec le procédé de l'invention est particulièrement bénéfique puisqu'il est possible ainsi d'amener l'élément nutritif et l'élément favorisant l'absorption de l'eau au niveau des racines de la plante à traiter, ce qui est l'emplacement auquel ses éléments auront le plus d'effet positif.

### Brève description des dessins

La présente invention sera mieux comprise à la lecture de la description d'exemples de réalisation, donnés à titre purement indicatif et nullement limitatif, en faisant référence aux dessins annexés sur lesquels :
- la figure 1 est une vue en perspective d'un dispositif d'introduction d'au moins un intrant conforme à l'invention ;
- la figure 2 illustre en perspective et en vue éclatée de certains de ses éléments constitutifs du dispositif d'introduction selon la figure 1 ;
- la figure 3 illustre, selon un autre angle, la vue en éclatée et en perspective du dispositif d'introduction illustrée par la figure 2 ;
- la figure 4 illustre selon une vue en coupe un tube injecteur du dispositif d'introduction illustrés sur les figures 1 à 3, le tube injecteur étant dans une position rétractée ;
- la figure 5 illustre selon une vue en coupe le tube injecteur de la figure 4 dans une position déployée ;
- la figure 6 est une vue en coupe longitudinale d'une première portion du tube injecteur illustré sur les figures 4 et 5, ladite portion présentant une ouverture et un obturateur conformé pour fermer ladite ouverture ;
- la figure 7 est une vue rapprochée en coupe longitudinale de la première portion de tube injecteur illustré sur la figure 6 montrant l'obturateur dans une première position dans laquelle il ferme l'ouverture,
- la figure 8 est une vue rapprochée en coupe longitudinale de la première portion de tube injecteur illustré sur la figure 6 montrant l'obturateur dans une deuxième position à laquelle il libère l'ouverture.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

On notera que dans le cadre de la présente description, les termes relatifs, tels que « au-dessus », « en dessous », « supérieur », « inférieur », « haut », «bas », font référence à l'orientation respective des éléments auxquels ils se rattachent lorsque le dispositif d'introduction est dans une configuration de fonctionnement, c'est-à-dire en appui sur le sol dans lequel l'au moins un intrant doit être introduit.

De même, dans le cadre de la présente description, les termes « amont » et « aval » doivent s'entendre relativement à la direction de circulation de l'au moins un intrant d'un réservoir le contenant vers le sol dans lequel il doit être introduit.

### Exposé détaillé de modes de réalisation particuliers

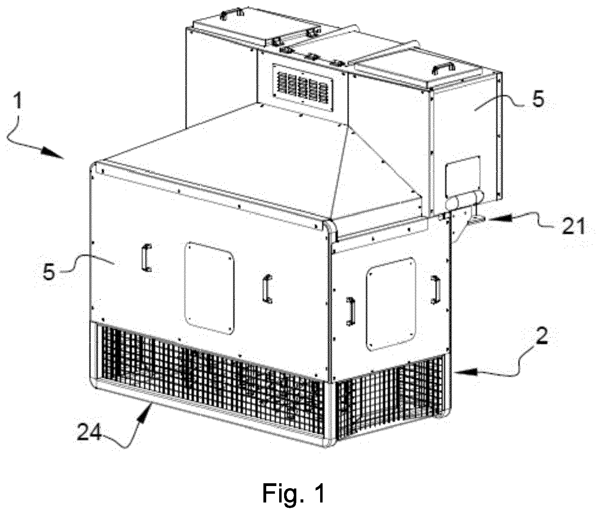

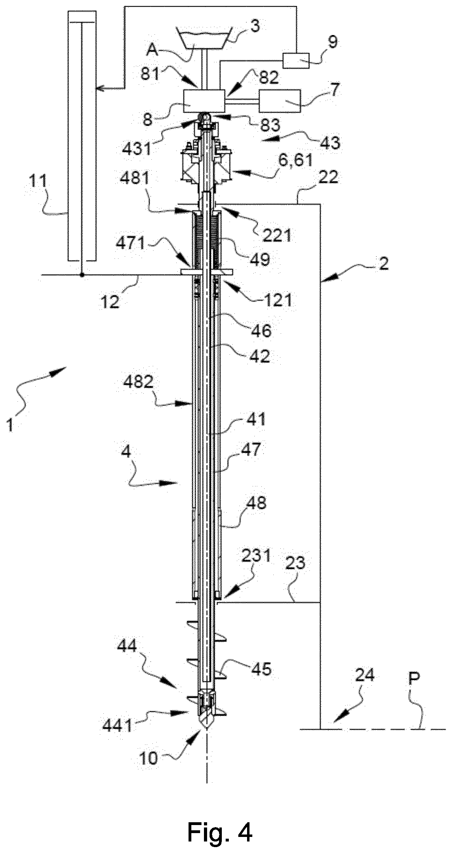

Les figures 1 à 3 illustrent, selon une vue en perspective et des vues en perspectives partiellement en éclaté, un dispositif d'introduction 1 d'au moins un intrant A, notamment figuré sur la figure 4, dans le sol, figuré par son plan P, ceci notamment dans le cadre du traitement d'une plante, non figurée, avec ledit au moins un intrant A.

Un tel dispositif d'introduction 1 selon l'invention est particulièrement adapté pour le traitement de plantes, telles que des palmiers, afin de leur fournir des intrants susceptibles de favoriser leur croissance.

Ainsi dans le cadre d'un exemple de réalisation de l'invention dans lequel la présente invention est particulièrement adaptée, le dispositif d'introduction 1 peut être utilisé pour l'introduction d'un intrant A dans un sol sablonneux au niveau de la racine d'un palmier, cet intrant A comprenant des éléments nutritifs, tel qu'un engrais, et des éléments favorisant l'absorption de l'eau et sa libération lente dans le temps. Il est évident que l'introduction d'un intrant A dans d'autres types de sols, caillouteux, terreux, est tout à fait réalisable avec un dispositif d'introduction 1 selon l'invention, le dispositif d'instruction 1 selon le présent mode de réalisation pouvant parfaitement être adapté pour ce type de sol sans que l'on sorte du cadre de l'invention.

Comme montré sur les figures 1 à 3, le dispositif d'introduction 1 comprend :
- un circuit d'alimentation en intrant apte à délivrer l'au moins un intrant A,
- au moins un tube injecteur 4, ici une pluralité, comprenant chacun une première portion 47 destinée à être enfoncée dans le sol, l'au moins tube injecteur 4 présentant sur la première portion 47 une ouverture 441, destinée à la délivrance de l'au moins un intrant A dans le sol, et un obturateur 10 conformé pour fermer ladite ouverture 441, ledit au moins un tube injecteur 4 étant alimenté en l'au moins un intrant A par le circuit d'alimentation,
- un mécanisme d'enfoncement de l'au moins un tube injecteur 4 configuré pour enfoncer au moins en partie la première portion du tube injecteur 4 dans le sol.

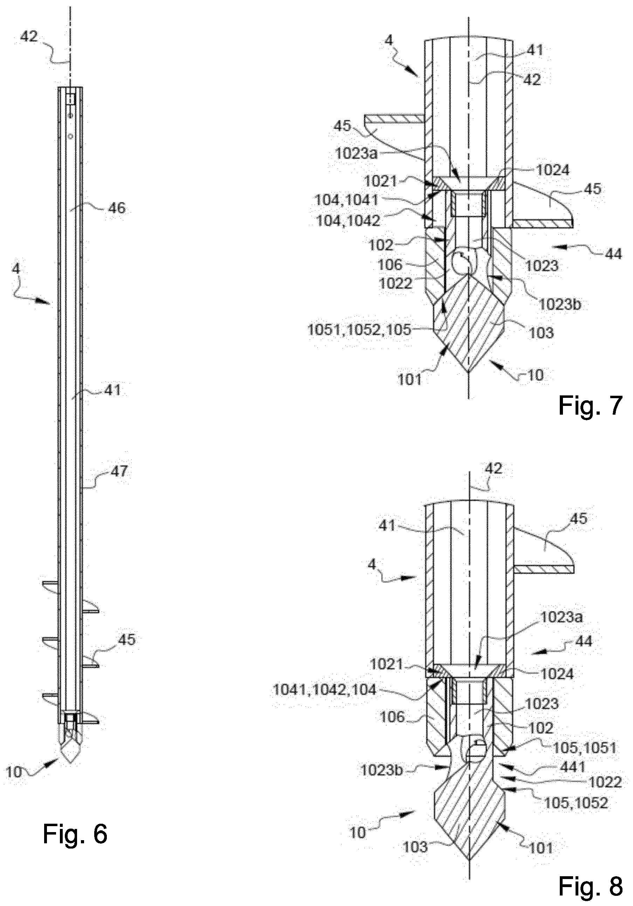

Comme cela est discuté plus avant dans la suite du présent document en lien avec les figures 6 à 8, l'obturateur 10 est monté mobile entre une première position dans laquelle il ferme l'ouverture 441, notamment montré sur la figure?, et une deuxième position dans laquelle il libère l'ouverture 441 figure7, notamment montré sur la figure 8. Le dispositif d'introduction 1 est configuré pour que l'obturateur 10 passe de la première à la deuxième position lorsqu'une extrémité libre de la première portion 447 atteint une profondeur prédéterminée.

La profondeur prédéterminée peut être déterminée en fonction du type d'intrant A, des besoins de la plante à traiter et des effets attendus par l'introduction de l'intrants. On notera que selon une possibilité avantageuse de l'invention, le dispositif d'introduction 1 selon l'invention comprend une interface homme-machine, non montrée, ou un système de communication, non montré, afin de permettre une préprogrammation de la profondeur prédéterminée. En variante, un opérateur du dispositif d'introduction 1 peut commander le dispositif afin qu'il atteigne la profondeur prédéterminée requise et ainsi permettre l'introduction de l'intrant à ladite profondeur.

On notera que, plus spécifiquement et comme montré sur la figure 1, le dispositif d'introduction 1 comprend un bâti 2. Le bâti 2 se présente sous la forme d'une structure métallique mécano-soudée munie d'un système d'attelage 21 afin de permettre l'équipement d'un véhicule de manoeuvre avec le dispositif d'introduction 1. Un tel véhicule de manoeuvre peut être par exemple un véhicule de type minipelle ou tractopelle, le dispositif d'introduction équipant selon cet exemple le bras de manoeuvre dudit véhicule.

Selon une autre possibilité de l'invention non illustrée, le bâti 2 peut être rendu autonome, le dispositif d'introduction 1 étant motorisé pour assurer son déplacement sur le sol et permettre son amené sur une zone à traiter

Comme on peut le voir sur les figures 1 à 3, le dispositif d'introduction 1 comprend des parois 5 fixées sur le bâti 2 de manière amovible, et destinés à protéger les éléments fonctionnels, détaillés dans la suite de la description, ainsi qu'à permettre un accès facilité pour les opérations de maintenance.

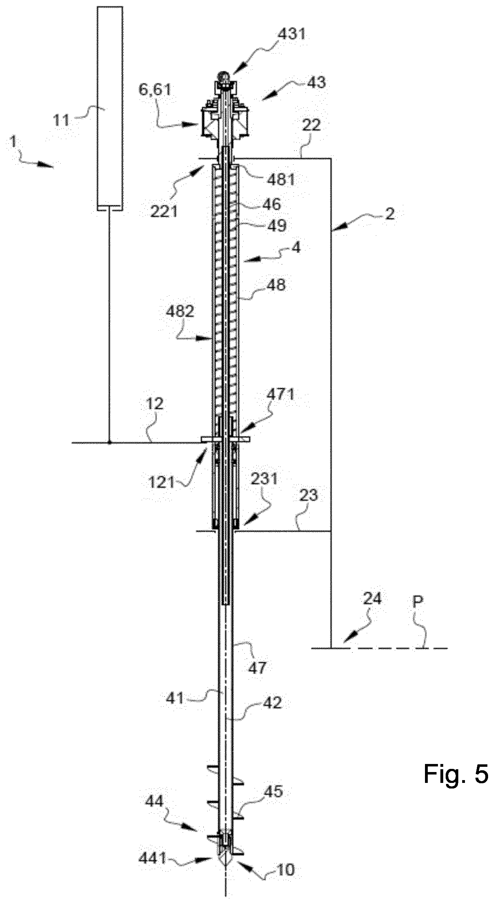

Le bâti 2 comprend en outre deux plateaux de maintien 22, 23 pour le maintien des tubes injecteurs 4, et un support d'appui au sol 24 (en forme de cadre mécano-soudé), disposé dans un plan d'appui au sol P, comme montré sur les figures 4 et 5.

Les tubes injecteurs 4 sont ici en nombre compris entre 10 et 40, voire entre 20 et 30 (par exemple au nombre de 24), disposés parallèlement les uns par rapport aux autres.

Chaque tube injecteur 4 se présente selon une forme générale tubulaire autourd'un axe longitudinal 42 (vertical en position normale de mise en oeuvre du dispositif d'introduction, c'est-à-dire en appui sur le sol). Chaque tube injecteur 4 présente ainsi une cavité longitudinale centrale 41 s'entendant entre une première extrémité de tube 43 (supérieure) munie d'un orifice d'entrée 431, et une deuxième extrémité de tube 44 (inférieure) munie de l'ouverture 441 pour libérer l'au moins un intrant A. L'orifice d'entrée 431 et l'ouverture 441 débouchent dans la cavité longitudinale centrale pour permettre respectivement l'alimentation du tube injecteur 4 en l'au moins un intrant A et pour permettre l'introduction de l'au moins un intrant A dans le sol une fois la profondeur prédéterminée atteinte.

Pour permettre leur enfoncement dans le sol, les tubes injecteurs 4 peuvent être filetés et comprennent ainsi un filet 45 qui s'étend sur une partie au moins de leur longueur, à partir de la deuxième extrémité de tube 44. Le dispositif d'introduction 1 peut également comprendre, pour chaque tube injecteur, un mécanisme de mise en prise 6 pour permettre un entraînement en rotation des tubes injecteurs 4 autour de leur axe longitudinal 42, cela dans les deux sens de rotation.

La longueur, ou hauteur (lorsque le tube est en position verticale) de la portion filetée du tube injecteur 45 peut être comprise entre 15 et 50 cm, voire entre 20 et 30 cm ou encore entre 22 et 27 cm. Bien entendu la position et l'inclinaison du filet, tout comme la largeur peuvent être variés/adaptés en fonction de la nature du sol.

Le mécanisme de mise en prise 6 pour entraîner en rotation chacun des tubes injecteurs 4 peut comprendre une roue d'entraînement, telle qu'une poulie 61, ménagée au niveau de la première extrémité de tube 43 des tubes injecteurs 4. Le dispositif d'introduction 1 comprend en outre des courroies 63 pour entraîner en rotation les différentes poulies 61 et au moins un système de motorisation, couplé à une ou à plusieurs des courroies de telle manière à ce que la mise en rotation du système de motorisation entraîne en rotation les tubes injecteurs 4.

Par exemple, les poulies 61 peuvent être entraînées en rotation, simultanément, par groupes de huit ; alors, les huit poulies 61 de chaque groupe sont entraînées en rotation par une même courroie d'entraînement 62, elle-même entraînée par un moteur 63 dédié du système de motorisation. Ainsi le système de motorisation peut comprendre un ou plusieurs moteurs 63. Ce ou ces moteurs 63 peuvent aussi bien être électrique que thermique en fonction des contraintes liées à l'utilisation du dispositif d'injection 1. Dans le présent mode de réalisation, les moteurs 63 du système de motorisation sont des moteurs électriques.

Bien entendu comme déjà indiqué, les caractéristiques du dispositif d'introduction 1, ceci notamment en ce qui concerne mécanisme d'enfoncement, peuvent être adaptées en fonction de la nature du sol et des plantations à traiter. Ainsi les poulies 61 du présent mode de réalisation peuvent être remplacées, sans que l'on sorte du cadre de l'invention par des poulies crantées aciers, c'est-à-dire par des engrenages, permettant un entraînement à chaines plus résistant à la vue de la nature de sols préalablement analysés présentant une dureté relativement importante. Selon cette possibilité, l'entraînement en rotation reste basé sur le même principe de distribution par moteur. Enfin, pour des raisons techniques et en fonction de la nature des traitements, le système de motorisation peut comprendre une motorisation respective pour chaque tube injecteur 4, sans nécessité de couplages par courroies ou par chaînes.

Les deux plateaux de maintien 22 et 23 du bâti 2 assurent le guidage en rotation des tubes injecteurs 4 par l'intermédiaire de paliers 221, 231.

Ces deux plateaux de maintien 22 et 23 s'étendent parallèlement l'un par rapport à l'autre. Le plateau de maintien supérieur 22 peut être agencé au niveau de la première extrémité de tube 43 des tubes injecteurs 4, juste sous les poulies 61.

Le plateau de maintien inférieur 23 peut être agencé à proximité de la une deuxième extrémité de tube des tubes injecteurs 4.

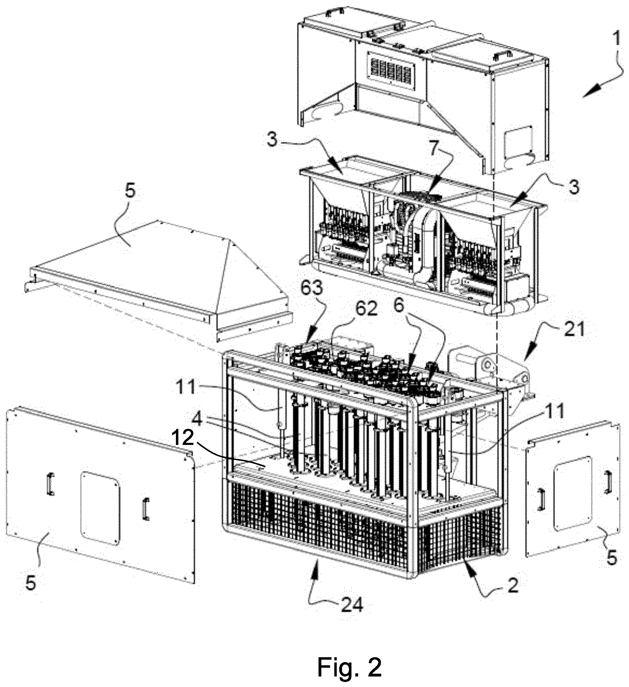

En addition aux plateaux de maintien 22 et 23, et afin de permettre l'enfoncement des tubes injecteurs, il est également prévu dans le cadre du présent mode de réalisation un plateau de manoeuvre 12 mobile en translation le long de l'axe longitudinale 42 à partir des vérins 11. Ce plateau de manoeuvre 12, montré sur les figures 2 à 5, est disposé entre les plateaux de maintien 22 et 23 et permet, comme cela est décrit dans la suite de ce document en lien avec les figures 4 et 5, l'application d'une pression des tubes injecteur 4 contre le sol.

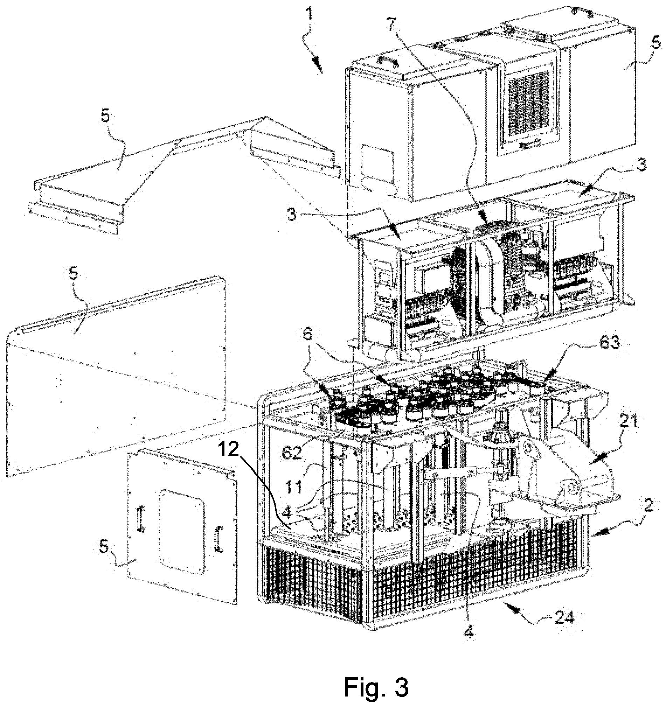

Afin de favoriser de visibilité de ces figures, dans les figures 2 et 3, les vérins 11 et le plateau de manoeuvre 12 sont montrés en position basse alors que les tubes injecteurs 4 sont montrés en position haute (c'est-à-dire replié). Afin de mieux comprendre la cinématique d'enfoncement des tubes injecteurs et de la transmission des efforts lors de l'actionnement des vérins 11 aux tubes injecteurs, il est donc nécessaire de se conférer au figures 4 et 5.

Le dispositif d'introduction 1 peut également comprendre une source de gaz pressurisé 7, tel qu'un compresseur ou un réservoir d'air comprimé (ici un compresseur), portée par le bâti 2. Le dispositif d'introduction 1 comprend en outre un circuit fluidique pour injecter un gaz pressurisé 7, à partir de la source de gaz pressurisé 7, dans le tube injecteur 4, par l'orifice d'entrée 431

Dans le mode de réalisation illustré, le bâti 2 supporte deux réservoirs 3 destinés à contenir l'au moins un intrant A entre lesquels est positionné le compresseur formant la source de gaz pressurisé 7. On notera que dans le cadre de l'invention, lorsque le dispositif d'introduction 1 comprend plusieurs réservoirs 3 comme c'est le cas dans le présent mode de réalisation, ils peuvent contenir chacun un type d'intrants respectifs, distinct l'un de l'autre. Une telle possibilité permet la fourniture d'une variation de la composition en intrant, i.e. proportion relative desdits deux types d'intrants, ou encore de fournir un traitement distinct par tubes injecteurs 1, des tubes injecteurs 4 étant alors dédiés à l'un des deux types d'intrants, le reste des tubes injecteurs 4 étant dédiés à l'autre des deux types d'intrants. En alternative, l'utilisation de plusieurs réservoirs peut fournir une autonomie plus importante au dispositif d'introduction 1 et ainsi lui permettre de traiter une parcelle de terrain plus importante.

D'autre part la première extrémité de chaque tube injecteur 4 est équipée d'une électrovanne 8 adaptée pour gérer l'arrivée de l'au moins un intrant A et du gaz pressurisé dans l'orifice d'entrée 431.

Pour cela, comme illustré sur la figure 4, l'électrovanne 8 est munie :
- d'une entrée 81 pour l'au moins un intrant A, en communication avec au moins l'un des réservoirs 3,
- d'une entrée 82 pour le gaz pressurisé, en communication avec la source de gaz pressurisé 7, et
- d'une sortie 83, commune pour l'au moins un intrant A et pour le gaz pressurisé, laquelle sortie 83 est en communication avec l'orifice d'entrée 431 du tube injecteur 4.

Le pilotage de l'électrovanne 8 est géré par une unité de commande 9 du dispositif d'introduction 1, telle qu'un automate programmable.

Sur les figures 4 à 8 on remarque que chaque tube injecteur 4 comprend l'obturateur 10 au niveau de la deuxième extrémité de tube 44.

L'obturateur 10 est monté mobile entre une première position dans laquelle il ferme l'ouverture 441, telle que montrée sur la figure 7, et une deuxième position dans laquelle il libère l'ouverture 441, telle que montrée sur la figure 8.

L'obturateur 10 comprend une ogive 101 montée libre en translation au niveau de la deuxième extrémité de tube 44 du tube injecteur 4 entre la première et la deuxième position.

Plus précisément, l'ogive 101 comprend un corps d'ogive 102 et une tête d'ogive 103. Dans la première position de l'obturateur 10 le corps d'ogive est logé dans la cavité longitudinale avec la tête d'ogive 103 qui ferme l'ouverture 441. On notera que dans le présent mode de réalisation, comme cela est décrit ci-après, l'ogive 102 présente cette position lors de l'enfoncement du tube injecteur 4 correspondant.

Le corps d'ogive 102 s'étend longitudinalement entre une première extrémité 1021 et une seconde extrémité 1022 qui se prolonge par ladite tête d'ogive 103.

Le corps d'ogive 102 présente une forme générale tubulaire délimitant au moins un canal d'ogive 1023 qui débouche, d'un côté au niveau de ladite première extrémité 1021 par une ouverture 1023a, et de l'autre côté au niveau de ladite seconde extrémité 1022 par une ouverture latérale 1023b, à proximité de ladite tête d'ogive 103. Comme on peut le voir sur les figures 7 et 8. Ainsi, lorsque l'obturateur est dans la deuxième position, le corps d'ogive 102 s'étendant en partie au-delà de l'ouverture 441, l'ouverture 441 est libérée puisqu'elle débouche vers l'extérieur au travers du canal d'ogive 1023 et de l'ouverture latérale 1023b. Dans le présent mode de réalisation, l'ogive présente cette deuxième position, comme cela est décrit ci-après, lors du retrait du tube injecteur 4 correspondant après que ce dernier est atteint la profondeur prédéterminée (pour être plus précis, que sa première extrémité est atteinte cette profondeur prédéterminée).

La tête d'ogive 103, à l'opposé du corps d'olive 102 est effilée, par exemple en forme de pointe tronconique, pour faciliter l'enfoncement dans le sol sableux. Bien entendu, la tête d'ogive peut avoir une forme différente en fonction de la nature des sols, sans que l'on sorte du cadre de l'invention.

Comme indiqué ci-dessus, l'ogive 101 est montée libre en translation cavité longitudinale centrale, au niveau de la deuxième extrémité de tube 44, sur une portion de coulissement entre une première et deuxième butée 104, 105, de sorte à pouvoir occuper :
- la première position de l'obturateur 10, dans laquelle le corps d'ogive 102 est logé dans la cavité longitudinale centrale du tube injecteur 41, avec la tête d'ogive 103 en appui sur l'ouverture 441 en permettant de la fermer, et
- la deuxième position, dans laquelle le corps d'ogive 102 est partiellement extrait de la cavité longitudinale centrale du tube injecteur 41, et dans l'ouverture 441 est libérée puisqu'elle débouche vers l'extérieur au travers du canal d'ogive 1023 et de l'ouverture latérale 1023b.

La distance de coulissement libre de l'ogive 101 peut être comprise entre 0,5 et 5 cm, voire entre 0,75 et 3 cm ou encore entre 1 et 2 cm.

La première butée 104 peut comprendre une surface de contact 1041 d'une couronne 1024 rapportée et soudée au niveau de la première extrémité 1021 du corps d'ogive 102, qui coopère avec une surface de contact 1042, interne, d'une bague 106 rapportée et soudée au niveau de la deuxième extrémité de tube 44.

La deuxième butée 105 peut comprendre une surface de contact 1052 de la tête d'ogive 103, qui coopère avec une surface de contact 1051, externe, de la bague 106 rapportée.

Avec une telle configuration de l'obturateur 10 et de l'ogive 101 qu'il comprend, l'obturateur 10 est donc monté coulissant le long d'un axe longitudinal dans la première portion du tube injecteur 4 de telle manière que, en fonctionnement le dispositif d'introduction 1, ledit axe longitudinal est sensiblement vertical et que :
- lorsque le tube injecteur 4 correspondant présente son extrémité libre en appui sur le sol pour son enfoncement, l'obturateur 10 (et l'ogive 101) est maintenu dans la première position par cet appui,
- lorsque l'extrémité libre de la première portion atteint une profondeur prédéterminée, le passage de l'obturateur 10 de la première à la deuxième position par coulissement est permise par un retrait au moins partiel du tube injecteur 4 du sol permettant de cesser l'appui de l'extrémité libre de la première portion sur le sol.

Bien entendu, un tel exemple de mécanisme d'ouverture de l'obturateur 10 n'est pas limitatif, puisqu'en variante, le mécanisme d'ouverture de l'obturateur 10 peut être motorisé ou encore hydraulique sans que l'on sorte du cadre de l'invention.

Comme on peut le voir sur les figures 4 et 5, les tubes injecteurs 4 présentent une configuration télescopique et comprennent chacun :
- un tronçon amont 46 du tube injecteur 4, fixe en translation par rapport aux plateaux de maintien 22, 23, et dont une extrémité constitue la première extrémité de tube 43, munie de l'orifice d'entrée 431,
- un tronçon aval 47 du tube injecteur 4, mobile en translation longitudinalement par rapport au tronçon amont 46, ledit tronçon aval 47 comprenant la première portion du tube injecteur 4,
- un fourreau périphérique 48, délimité par une paroi de fourreau, dans lesquels sont partiellement logés le tronçon amont de tube injecteur 46 et le tronçon aval de tube injecteur 47, de telle manière que les tronçons amont, aval 46, 47 et le fourreau périphérique 48 soient co-axiaux.

Ainsi d'une telle configuration télescopique, chaque tube injecteur4 peut se déplacer entre :
- une conformation repliée, telle qu'illustrée sur la figure 4, dans laquelle une majeure partie du tronçon amont 46 est logée dans le tronçon aval 46, et
- une conformation déployée, telle qu'illustrée sur la figure 5, dans laquelle une partie minimale du tronçon amont 46 de tube injecteur est logée dans le tronçon aval 47 de tube injecteur.

La première portion étant comprise dans le tronçon aval 47, le filet 45 est aménagé sur le tronçon aval 47 au niveau de ladite première portion.

Afin de contrôler le déplacement de chacun des tubes injecteurs 4 entre sa conformation repliée et sa conformation déployée, le dispositif d'introduction 1 peut comprendre un système d'actionnement des tubes injecteurs 4. Si ce système d'actionnement est ici partiellement commun, comme cela est explicité ci-après, ce système d'actionnement peut être individuel, pour permettre un déplacement indépendant de chacun des tubes injecteurs 4, ou totalement mise en commun, pour permettre un déplacement de l'ensemble des tubes injecteurs 4, ceci sans que l'on sorte du cadre de l'invention.

Le système d'actionnement des tubes injecteurs 4 peut comprendre, pour chacun des tubes injecteurs 4 des moyens de rappel élastique agencés pour tendre à déployer le tronçon aval 47 par rapport au tronçon amont 46. On notera que dans une configuration du système d'actionnement partiellement commun tel que c'est le cas dans le présent mode de réalisation, de tels moyens de rappel élastique permettent de réduire les risques d'endommagement des tubes injecteurs 4 lors du passage des tubes injecteurs 4 de la conformation repliée à la conformation déployée, puisqu'en cas d'obstacle, tel qu'une pierre, au déplacement d'un tube injecteur 4, ce dernier stoppera son déplacement vers la conformation déployée dès que l'effort de l'obstacle est supérieur à la force de rappel des moyens de rappel élastique.

Ces moyens de rappel élastique se présentent sous la forme d'un ressort hélicoïdale 49 disposé dans le fourreau périphérique 48, interposé entre une butée de fourreau 481 solidaire du fourreau périphérique 48 (constituant ici l'une des extrémités du fourreau 48) et une butée de tronçon aval 471, solidaire du tronçon aval 47.

Le système d'actionnement des tubes injecteurs 4 comprend également les vérins 11, dans le présent mode de réalisation deux, agencés pour commander le déplacement des tronçons avals 47 par rapport aux tronçons amonts 46, accompagnée de la mise en compression des moyens de rappel élastique. On notera bien entendu que s'il est prévu deux vérins dans le présent mode de réalisation, il peut être prévu un nombre de vérins distincts sans que l'on sorte du cadre de l'invention. Ainsi, il est parfaitement envisageable, avec un dimensionnement du dispositif d'introduction 1 adéquat, de prévoir un unique vérin ou encore un nombre supérieur à deux, tels que quatre vérins 11 voire 6 vérins.

Pour cela, les vérins 11 actionnent le plateau de manoeuvre 12 mobile en translation le long de l'axe longitudinale 42, lequel plateau de manoeuvre 12 est solidaire du tronçon aval 47 de chacun des tubes injecteurs 4 par l'intermédiaire d'un système de liaison 121 qui transite dans une lumière longitudinale 482 ménagée dans la paroi de fourreau du fourreau périphérique 48 (cette lumière longitudinale 482 s'étend parallèlement à l'axe longitudinal 42 du tube injecteur 4).

De cette manière, lors de leur déplacement de la positon début de course, c'est-à-dire la tige du vérin logée dans le corps de vérin comme montré sur la figure 4, à la position de fin de course, c'est-à-dire la tige du vérin sortie du corps de vérin et en butée avec l'une des extrémités de ce dernier comme montré sur la figure 5, les vérins vont permettre le déplacement du plateau de manoeuvre 12, ce qui va à son tour libérer les efforts fournis par les moyens de rappel élastique. Ainsi, en l'absence d'obstacle, le déplacement du plateau de manoeuvre permet de libérer l'application d'une pression des tubes injecteurs 4 contre le sol.

Comme montré sur les figures 4 et 5, le plateau de manoeuvre 12 est ici disposé entre les deux plateaux de maintien 22, 23, et s'étend parallèlement à ces derniers.

La manoeuvre des vérins 11 peut être pilotée par l'unité de commande 9.

On notera qu'en variante à une telle configuration du système d'actionnement des tubes injecteurs 4, le système d'actionnement des tubes injecteurs 4 peut être adapté pour déplacer indépendamment les uns des autres les tubes injecteurs 4. Un tel déplacement indépendant peut par exemple être obtenu à partir d'un mécanisme de couplage/découplage de chaque tube injecteur 4 avec le système d'actionnement de manière à permettre de découpler un tube injecteur 4 lorsqu'un obstacle, tel qu'une pierre ou de la roche, est détecté pour ledit tube injecteur 4.

En complément avec cette variante, le dispositif d'introduction 1 peut comprendre un capteur de couple adapté pour mesurer un couple appliqué par le mécanisme de mise en prise 6 et le système de motorisation sur l'au moins un tube injecteur 4 lors de son entraînement en rotation. Selon cette possibilité, en cas de détection d'un couple dépassant un seuil donné, preuve de la détection d'un obstacle, le tube injecteur 4 pour lequel un tel dépassement a été détecté peut-être découpler du système d'actionnement, et éventuellement du système de motorisation, afin d'arrêter son déplacement et éviter son endommagement.

On notera que dans le présent mode de réalisation, le système d'actionnement, le mécanisme de mise en prise 6 et le système de motorisation forment ensemble le mécanisme d'enfoncement des tubes injecteurs 4.

Dans le cadre de l'invention, un tel dispositif d'introduction 1 peut être mise en oeuvre dans le cadre d'un procédé d'introduction d'au moins un intrant A dans le sol à une profondeur prédéterminé, un tel procédé comprenant les étapes suivantes :
- enfoncement de la première portion de chaque tube injecteur 4 dans le sol jusqu'à que l'extrémité libre de la première portion atteigne une profondeur prédéterminée,
- passage de l'obturateur 10 de la première position dans laquelle il ferme l'ouverture à la deuxième position dans laquelle il libère l'ouverture 441,
- alimentation de chaque tube injecteur 4 par l'au moins un intrant A afin que celui-ci soit introduit dans le sol par l'ouverture 441.

On notera que dans le cadre du présent mode de réalisation, afin de mettre le dispositif d'introduction 1 dans une configuration de transport, il peut être prévu, préalablement à la mise en oeuvre du procédé d'introduction ci-dessus, l'étape suivante :
- actionnement des vérins 11 pour positionner la deuxième extrémité de tube 44 de chaque tubes injecteurs 4 au-dessus du plan d'appui au sol P du bâti 2, c'est-à-dire placé les tubes injecteurs 4 dans la conformation repliée.

Avec une telle étape préalable, les tubes injecteurs 4 sont complètement logés dans l'encombrement du bâti 2 pour protéger en particulier la deuxième extrémité de tube 44 contre les chocs lors du stockage ou du transport de l'installation. Cette étape préalable permet aussi, par la compression des ressorts hélicoïdaux, 49 de préparer les tubes injecteurs 4 à l'étape d'enfoncement dans le sol.

Plus spécifiquement, dans le cadre du présent mode de réalisation, l'étape d'enfoncement de la première portion de l'au moins un tube injecteur 4 dans le sol peut comprendre les sous-étapes suivantes :
- position du bâti 2 sur le sol par l'intermédiaire du support d'appui au sol 24,
- actionnement des vérins 11 pour soumettre les tubes injecteurs 4 aux moyens de rappel élastique, i.e. ressort hélicoïdaux 49, l'obturateur 10 se plaçant dans la première position compte tenu de l'appui de la deuxième extrémité de tube 44, et donc de l'obturateur 10 et son ogive 101, sur le sol,
- Entrainement en rotation les tubes injecteurs 4 (par l'action des moteurs 63 du système motorisé) pour assurer l'enfoncement dans le sol la deuxième extrémité de tube 44, en combinaison avec l'action de poussée des ressorts hélicoïdaux 49.

Le positionnement du bâti 2 sur le sol est réalisé après la prise en charge du dispositif d'introduction 1 par le bras de manoeuvre de l'engin de manoeuvre (minipelle à roues par exemple). Elle est réalisée sur la zone à traiter, en particulier sur le côté d'une plante, telle qu'un palmier.

Comme précisé, lors de cet enfoncement dans le sol, chaque obturateur 10 est maintenu dans sa première position dans laquelle il ferme l'ouverture 441 par l'appui de la deuxième extrémité de tube 44 sur le sol.

Lors de l'étape de passage de l'obturateur 10 dans sa deuxième position, celle dans laquelle il libère l'ouverture 441, il peut être prévu les sous-étapes suivantes :
- Lorsque la profondeur prédéterminée est atteinte (par exemple de l'ordre de 40 à 60 cm), la rotation du système de motorisation, et donc des tubes injecteurs 4, peut être inversée pour initier l'extraction des tubes injecteurs 4 du sol.

Cette initiation de l'extraction des tubes injecteurs 4 permet un déplacement de chaque obturateur de sa première position vers sa deuxième position sous l'effet combiné des frottements du substrat de sol et de la gravité.

Lors de l'étape d'alimentation de chaque tube injecteur 4 par l'au moins un intrant A afin que celui-ci soit introduit dans le sol par l'ouverture 441, cette injection peut être réalisée sous pression du gaz pressurisé.

Cette injection d'air comprimé peut être réalisée après que les deuxièmes extrémités de tube 44 aient atteint la profondeur prédéterminée et que les tubes injecteurs aient commencé leur remontée sous l'action des vérins 11.

Dans le cadre de cette étape d'alimentation de chaque tube injecteur 4 par l'au moins un intrant A, la quantité d'intrant A introduite pour chacun des tubes injecteurs 4 peut être de l'ordre de 5 à 15 g. Cette quantité de produit transféré peut être réglée par l'automate programmable 9, en intervenant sur le temps d'ouverture de l'entrée 81 de l'électrovanne 8.

Le produit d'intérêt A est acheminé depuis le ou les réservoirs 3 jusqu'aux électrovannes 8 associées aux tubes injecteurs 4, par gravité, en cheminant dans des conduites de transfert adaptées.

Bien entendu lors de cette même étape, l'alimentation en intrant A des tubes injecteurs 4 peut ne pas être réalisée simultanément dans l'ensemble des tubes injecteurs 4, mais être réalisé séquentiellement dans un ou plusieurs tubes injecteurs 4, cela pour limiter la charge de la source de gaz pressurisé 7 et limiter les besoins en débit de gaz.

Une fois le procédé d'introduction de l'au moins un intrant A dans le sol mise en oeuvre, il peut être prévu les étapes postérieures suivantes afin de préparer le dispositif d'introduction en vue du traitement d'une autre zone et/ou d'une autre plante :
- extraction hors du sol de la deuxième extrémité de tube 44 des tubes injecteurs 4, ceci notamment par l'actionnement combiné des vérins 11 et du système de motorisation,
- éventuelle injection de gaz pressurisé dans les tubes injecteurs pour assurer leur dégagement et leur nettoyage,
   lors de l'étape extraction hors du sol, l'actionnement des vérins 11 est avantageusement réalisé pour positionner la deuxième extrémité de tube 44 au-dessus du support d'appui au sol 24, en vue.

Selon un exemple de mise en oeuvre, une plante, tel qu'un palmier, peut être traitée par quatre cycles de dépose régulièrement répartis sur son pourtour.

Les séquences d'enfoncement des tubes injecteurs 4 dans le sol et d'acheminement du produit d'intérêt A dans les tubes injecteurs 4, puis dans le sol, peuvent être gérées par l'unité de commande 9.

Dans le cadre de la présente invention, le temps de mise en oeuvre du procédé peut être de l'ordre de 2 à 3 min, avec un temps de descente (creusage) de l'ordre de 20 à 30 s, un temps de dépose (ou lâcher) de l'ordre de 1 s, et un temps de remontée (extraction) de l'ordre de 15 s. Il est ainsi envisageable de traiter une plante, sur la base de quatre cycles, en un peu moins de 10 min.

## Revendications

1. Dispositif d'introduction (1) d'au moins un intrant (A) dans le sol, le dispositif d'introduction (1) comprenant :
- un circuit d'alimentation en intrant apte à délivrer l'au moins un intrant (4),
- au moins un tube injecteur (4) comprenant une première portion destinée à être enfoncée dans le sol, l'au moins tube injecteur (4) présentant sur la première portion une ouverture (441), destinée à la délivrance de l'au moins un intrant (A) dans le sol, et un obturateur (10) conformé pour fermer ladite ouverture (441), ledit au moins un tube injecteur (4) étant alimenté en l'au moins un intrant (A) par le circuit d'alimentation,
- un mécanisme d'enfoncement de l'au moins un tube injecteur (4) configuré pour enfoncer au moins en partie la première portion du tube injecteur (4) dans le sol,
dans lequel l'obturateur (10) est monté mobile entre une première position dans laquelle il ferme l'ouverture (441) et une deuxième position dans laquelle il libère l'ouverture (441), le dispositif d'introduction (1) étant configuré pour que l'obturateur (10) passe de la première à la deuxième position lorsqu'une extrémité libre de la première portion atteint une profondeur prédéterminée.

2. Dispositif d'introduction (1) selon la revendication 1, dans lequel l'au moins un tube injecteur (4) s'étend longitudinalement et présente sa première portion filetée,
et dans lequel le mécanisme d'enfoncement comprend un système d'entraînement en rotation de l'au moins un tube injecteur (4).

3. Dispositif d'introduction (1) selon la revendication 2, dans lequel le mécanisme d'enfoncement comprend un capteur de couple adapté pour mesurer un couple appliqué par le mécanisme d'enfoncement sur l'au moins un tube injecteur (4) lors de son entraînement en rotation et
dans lequel le dispositif d'introduction (1) est configuré pour stopper l'entraînement en rotation de l'au moins un tube injecteur (4) lorsque le couple dépasse une valeur seuil.

4. Dispositif d'introduction (1) selon l'une quelconque des revendications 1 à 3, dans lequel l'extrémité libre de la première portion est affinée et dans lequel le mécanisme d'enfoncement est en outre configuré pour exercer une pression de l'au moins un tube injecteur (4) contre le sol.

5. Dispositif d'introduction (1) selon l'une quelconque des revendications 1 à 4, dans lequel le circuit d'alimentation comprend un réservoir destiné à contenir l'au moins un intrant (A), le réservoir présentant une ouverture de délivrance de l'au moins un intrant (A) reliée fluidiquement à l'au moins un tube injecteur (4) au moyen d'une vanne (8),
et dans lequel le réservoir est agencé de telle manière à ce que, en utilisation du dispositif d'introduction (1), le réservoir est au-dessus de l'au moins un tube injecteur (4) et que l'au moins un intrant (A) soit délivré à l'au moins un tube injecteur (4) lors de l'ouverture de la vanne par action de la gravité sur ledit au moins un intrant (A).

6. Dispositif d'introduction (1) selon l'une quelconque des revendications 1 à 5, dans lequel le circuit d'alimentation comprend une source de gaz pressurisé (7) et est configuré pour délivrer l'au moins un intrant (A) sous pression d'un gaz pressurisé fourni par la source de gaz pressurisé (7), ladite source de gaz pressurisé étant préférentiellement une source d'air pressurisé.

7. Dispositif d'introduction (1) selon la revendication 6, dans lequel l'obturateur (10) est configuré pour passer de la première position à la deuxième position sous pression du gaz pressurisée.

8. Dispositif d'introduction (1) selon l'une quelconque des revendications 1 à 6, dans lequel l'au moins obturateur (10) est monté coulissant le long d'un axe longitudinal dans la première portion du tube injecteur (4) entre la première et la deuxième positon,
dans lequel, en fonctionnement du dispositif d'introduction (1), ledit axe longitudinal est sensiblement vertical de telle manière que :
- lorsque l'au moins un tube injecteur (4) présente son extrémité libre en appui sur le sol pour son enfoncement, l'obturateur (10) est maintenu dans la première position par cet appui,
- lorsque l'extrémité libre de la première portion atteint la profondeur prédéterminée, le passage de l'obturateur (10) de la première à la deuxième position par coulissement est permise par un retrait au moins partiel du tube injecteur (4) du sol permettant de cesser l'appui de l'extrémité libre de la première portion sur le sol.

9. Procédé d'introduction d'au moins un intrant (A) dans le sol à une profondeur prédéterminée, le procédé d'introduction étant mise en oeuvre au moyen d'un dispositif d'introduction (1) selon l'une quelconque des revendications 1 à 8, le procédé d'introduction comprenant les étapes suivantes :
- enfoncement de la première portion de l'au moins un tube injecteur (4) dans le sol jusqu'à que l'extrémité libre de la première portion atteigne une profondeur prédéterminée,
- passage de l'obturateur (10) de la première position dans laquelle il ferme l'ouverture à la deuxième position dans laquelle il libère l'ouverture (441),
- alimentation de l'au moins un tube injecteur (4) par l'au moins un intrant (A) afin que celui-ci soit introduit dans le sol par l'ouverture (441).

10. Procédé d'introduction d'au moins un intrant (A) selon la revendication 9, dans lequel lors de l'étape d'alimentation de l'au moins un tube injecteur (4) par l'au moins un intrant (A), l'au moins un intrant (A) est délivré sous pression d'un gaz pressurisé.

11. Procédé d'introduction d'au moins un intrant (A) selon l'une quelconque des revendications 9 ou 10, dans lequel l'au moins un intrant (A) comprend un élément nutritif et un élément favorisant l'absorption de l'eau.
